# EUROPEAN PATENT SPECIFICATION

(11) **EP 3 142 776 B1**
(45) Date of publication and mention of the grant of the patent: **17.10.2018**
(21) Application number: 15721998.1
(22) Date of filing: 05.05.2015
(51) Int. Cl.: B01D 63/10, B01D 65/08

(54) **SPIRAL WOUND MODULE WITH INTEGRATED PERMEATE FLOW CONTROLLER**
SPIRALFÖRMIG GEWICKELTES MODUL MIT INTEGRIERTEM PERMEATDURCHFLUSSSTEUERGERÄT
MODULE ENROULÉ EN SPIRALE AVEC RÉGULATEUR DE DÉBIT DE PERMÉAT INTÉGRÉ

(30) Priority: 14.05.2014 US 201461992950 P
(43) Date of publication of application: 22.03.2017
(73) Proprietor: Dow Global Technologies LLC, Midland, MI 48674 (US)
(72) Inventor: JONS, Steven D., Minneapolis, MN 55439 (US); FRANKLIN, Luke, Minneapolis, MN 55439 (US)
(74) Representative: Beck Greener
(86) International application number: PCT/US2015/029140
(87) International publication number: WO 2015/175257

(56) References cited:
- EP-A1- 2 008 705
- WO-A1-2014/176067
- JP-A- 2000 167 358
- JP-A- 2001 137 672
- "Catalogue Maric Flow Control Australia Constant Flow Rate Regardless of Pressure", , 30 November 2011 (2011-11-30), XP055267327, Retrieved from the Internet: URL:http://maric.com.au/wp-content/uploads /Maric_Catalogue_Nov2011.pdf [retrieved on 2016-04-20]

## Description

### FIELD

The invention is directed toward spiral would modules suited for use in liquid separations.

### INTRODUCTION

Spiral wound membrane assemblies are used in a wide variety of fluid separations. In a conventional residential embodiment, a single spiral wound reverse osmosis (RO) membrane module ("element") is housed within a pressure vessel that includes a feed (water) inlet, a concentrate (reject) outlet and a permeate outlet. During operation, pressurized feed fluid is introduced into the vessel via the feed inlet, passes through the module and exits the vessel in at least two streams: concentrate and permeate. Spiral wound membrane assemblies are typically designed to operate within a specific range of flux and recovery - both of which are ideally limited to a maximum permeate flow based on operation conditions. In larger RO systems, the applied pressure and reject flow are usually separately controlled to obtain optimized operation, and regular cleanings and maintenance operations further contribute to long system life. By contrast, residential RO systems encounter a wide range of feed pressures and quality of operating conditions and minimal system maintenance is performed by the end user. Additionally, to accommodate both the variable feed conditions (especially pressure and osmotic strength) and the general desire of end users for high flow, systems may be configured to operate at a high and unsustainable initial flux ("over fluxing"). This in turn leads to premature membrane fouling and scaling. These problems may be exacerbated when operated at high recovery.

A variety of techniques have been described to modify flow distribution from RO modules within a vessel by providing restriction to permeate flow. For example: US 4046685 provides a flow restrictor within the permeate pathway of a vessel to allow differentiated streams to be obtained from both ends of the vessel. US 2007/0272628 utilizes a combination of elements having different standard specific flux values to better manage differences in operating conditions across the vessel, and embodiments utilize a flow restrictor within the permeate collection tube to isolate liquid from the different types of elements. WO 2012/086478 utilizes a resistance pipe fixed within the permeate collection tube of an upstream element to reduce permeate flow. US 7410581 describes the use of flow restrictors that can be moved to alternative positions along the permeate collection tubes of interconnected modules.
JP 2000 167358 discloses several spiral wound modules in series with a valve or a shutter in the permeate connection tube between the modules in order to provide a constant permeate flow and to prevent clogging of membranes.
JP2001137672 discloses similarly a valve positioned in the middle of a series of modules in the permeate connection tube.
WO2014/176067 discloses a spiral wound module with a compliant member at any location within the permeate tube.
A leaflet of the company Maric (http://maric.com.au/wp-content/uploads/Maric Catalogue_Nov2011.pdf) discloses that compliant members can generally be used for reverse osmosis.

### SUMMARY

The present invention provides a spiral wound assembly comprising a pressure vessel including a feed inlet, a concentrate outlet and a permeate outlet;
a single spiral wound membrane module located within the pressure vessel comprising at least one membrane envelope wound about a permeate collection tube; the permeate collection tube has a length extending from a first end to an opposing second end and comprises a plurality of openings along a portion of its length between said ends;
a permeate flow path extends from within the membrane envelope through the openings and into the permeate collection tube and exits the second end of permeate collection tube; and
wherein the module is characterized by a flow controller located within or fixed to the permeate collection tube such that at least 90% of permeate flowing along the permeate flow path passes through the flow controller prior to exiting the second end of the permeate collection tube; and wherein the flow controller comprises a compliant member that increases flow resistance as permeate flow increases.
The assembly is suitable for use in reverse osmosis (RO) and nanofiltration (NF) systems and is particularly adapted to provide more uniform flow over a broad range of operating conditions, e.g. feed pressures from 100 kPa to 500 kPa. The membrane envelope is wound about a permeate collection tube, and a flow controller is located within or fixed to the permeate collection tube and provides a flow resistance that varies as a function of permeate flow. Many different embodiments are described.

### BRIEF DESCRIPTION OF THE DRAWINGS

The figures are not to scale and include idealized views to facilitate description. Where possible, like numerals have been used throughout the figures and written description to designate the same or similar features.
Figure 1 is a perspective, partially cut-away view of a spiral wound module.
Figure 2 is a partial cross-sectional view of an embodiment of the subject assembly.
Figure 3 illustrates flow controllers positioned in three different permeate collection tubes.
Figures 3a and 3c are not according to the invention, while figure 3b is according to the invention.
Figure 4 is a plot of flow (1/hr) versus pressure differential (kPa) across a flow controller.

### DETAILED DESCRIPTION

Reverse osmosis (RO) and nanofiltration (NF) are membrane-based separation processes where pressure is applied to a feed solution on one side of a semi-permeable membrane. The applied pressure causes "solvent" (e.g. water) to pass through the membrane (i.e. forming a "permeate") while "solutes" (e.g. salts) are unable to pass through the membrane and are concentrated in the remaining feed (i.e. forming a "concentrate" solution). Once concentrated beyond their solubility limit, retained salts (e.g. CaCO₃) begin to form scale on the membrane. Such scale is especially problematic for long term operation of residential RO systems at high recovery.

The present invention includes a spiral wound module suitable for use in reverse osmosis (RO) and nanofiltration (NF) systems. Such modules include one or more RO or NF membrane envelops and feed spacer sheets wound about a permeate collection tube. RO membranes used to form envelops are relatively impermeable to virtually all dissolved salts and typically reject more than about 95% of salts having monovalent ions such as sodium chloride. RO membranes also typically reject more than about 95% of inorganic molecules as well as organic molecules with molecular weights greater than approximately 100 Daltons. NF membranes are more permeable than RO membranes and typically reject less than about 95% of salts having monovalent ions while rejecting more than about 50% (and often more than 90%) of salts having divalent ions - depending upon the species of divalent ion. NF membranes also typically reject particles in the nanometer range as well as organic molecules having molecular weights greater than approximately 200 to 500 Daltons. For purposes of this description, the term "hyperfiltration" encompasses both RO and NF.

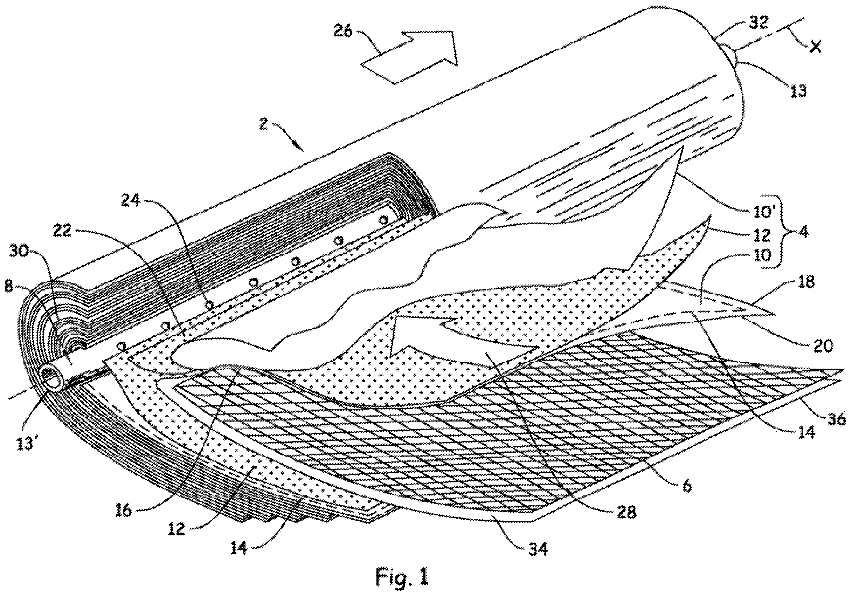

A representative spiral wound membrane module is generally shown at 2 in Figure 1. The module (2) is formed by concentrically winding one or more membrane envelopes (4) and optional feed spacer sheet(s) ("feed spacers ") (6) about a permeate collection tube (8). The permeate collection tube (8) has length extending between an opposing first and second end (13', 13) and includes a plurality of openings (24) along a portion of its length. Each membrane envelope (4) preferably comprises two substantially rectangular sections of membrane sheet (10, 10'). Each section of membrane sheet (10, 10') has a membrane or front side (34) and support or back side (36). The membrane envelope (4) is formed by overlaying membrane sheets (10, 10') and aligning their edges. The sections (10, 10') of membrane sheet surround a permeate spacer sheet (12). This sandwich-type structure is secured together, e.g. by sealant (14), along three edges (16, 18, 20) to form an envelope (4) while a fourth edge, i.e. "proximal edge" (22) abuts the permeate collection tube (8) so that the inside portion of the envelope (4) (and optional permeate spacer (12)) is in fluid communication with the openings (24) extending along a portion of the length of the permeate collection tube (8). The module (2) may include a single envelope or a plurality of membrane envelopes (4) each separated by a feed spacer sheet (6). In the illustrated embodiment, membrane envelopes (4) are formed by joining the back side (36) surfaces of adjacently positioned membrane leaf packets. A membrane leaf packet comprises a substantially rectangular membrane sheet (10) folded upon itself to define two membrane "leaves" wherein the front sides (34) of each leaf are facing each other and the fold is axially aligned with the proximal edge (22) of the membrane envelope (4), i.e. parallel with the permeate collection tube (8). A feed spacer sheet (6) is shown located between facing front sides (34) of the folded membrane sheet (10). The feed spacer sheet (6) facilitates flow of feed fluid through the module (2). While not shown, additional intermediate layers may also be included in the assembly. Representative examples of membrane leaf packets and their fabrication are further described in US 7875177 to Haynes et al.

During module fabrication, permeate spacer sheets (12) may be attached about the circumference of the permeate collection tube (8) with membrane leaf packets interleaved therebetween. The back sides (36) of adjacently positioned membrane leaves (10, 10') are sealed about portions of their periphery (16, 18, 20) to enclose the permeate spacer sheet (12) and to form a membrane envelope (4). Suitable techniques for attaching the permeate spacer sheet to the permeate collection tube are described in US 5538642 to Solie. The membrane envelope(s) (4) and feed spacer(s) (6) are wound or "rolled" concentrically about the permeate collection tube (8) to form two opposing scroll faces (inlet scroll face (30) and outlet scroll face (32)). The resulting spiral bundle is held in place by tape or other means. The scroll faces (30,32) of the module may then be trimmed and a sealant may optionally be applied at the junction between the scroll face (30, 32) and permeate collection tube (8) as described in US 7951295 to Larson et al. An impermeable layer such as tape may be wound about the circumference of the wound module as described in US 8142588 to McCollam. Alternatively, a porous tape or fiberglass coating may be applied to the module's periphery.

In operation pressurized feed liquid (water) enters the module (2) at the inlet scroll face (30) and flows in a generally axial direction through the module and exits as concentrate at the outlet scroll face (32) - by arrow (26). Permeate flows along a permeate flow path generally shown by arrow (28) which extends through the membrane (10, 10') and into the membrane envelope (4) where it flows into the openings (24), through the permeate collection tube (8) and exits the second end (13) of the tube (8) at the outlet scroll face (32). The first end (13') of the permeate collection tube (8) is preferably sealed to prevent fluid flow therethrough.

Materials for constructing various components of spiral wound modules are well known in the art. Suitable sealants for sealing membrane envelopes include urethanes, epoxies, silicones, acrylates, hot melt adhesives and UV curable adhesives. While less common, other sealing means may also be used such as application of heat, pressure, ultrasonic welding and tape. Permeate collection tubes are typically made from plastic materials such as acrylonitrile-butadiene-styrene, polyvinyl chloride, polysulfone, poly (phenylene oxide), polystyrene, polypropylene, polyethylene or the like. Tricot polyester materials are commonly used as permeate spacers. In some modules, the permeate collection tube comprises multiple sections and these may be joined together, such as by adhesive or spin welding. Additional permeate spacers are described in US 8388848.

The membrane sheet is not particularly limited and a wide variety of materials may be used, e.g. cellulose acetate materials, polysulfone, polyether sulfone, polyamides, polysulfonamide, polyvinylidene fluoride, etc. A preferred membrane is a three layer composite comprising 1) a backing layer (back side) of a nonwoven backing web (e.g. a non-woven fabric such as polyester fiber fabric available from Awa Paper Company), 2) a middle layer comprising a porous support having a typical thickness of about 25-125 µm and 3) a top discriminating layer (front side) comprising a thin film polyamide layer having a thickness typically less than about 1 micron, e.g. from 0.01 micron to 1 micron but more commonly from about 0.01 to 0.1 µm. The backing layer is not particularly limited but preferably comprises a non-woven fabric or fibrous web mat including fibers which may be orientated. Alternatively, a woven fabric such as sail cloth may be used. Representative examples are described in US 4,214,994; US 4,795,559; US 5,435,957; US 5,919,026; US 6,156,680; US 2008/0295951 and US 7,048,855. The porous support is typically a polymeric material having pore sizes which are of sufficient size to permit essentially unrestricted passage of permeate but not large enough so as to interfere with the bridging over of a thin film polyamide layer formed thereon. For example, the pore size of the support preferably ranges from about 0.001 to 0.5 µm. Non-limiting examples of porous supports include those made of: polysulfone, polyether sulfone, polyimide, polyamide, polyetherimide, polyacrylonitrile, poly(methyl methacrylate), polyethylene, polypropylene, and various halogenated polymers such as polyvinylidene fluoride. The discriminating layer is preferably formed by an interfacial polycondensation reaction between a polyfunctional amine monomer and a polyfunctional acyl halide monomer upon the surface of the microporous polymer layer.

The proto-typical membranes for reverse osmosis are FilmTec Corporation's FT-30™ type membranes, made by reaction of m-phenylene diamine and trimesoyl chloride. This and other interfacial polycondensation reactions are described in several sources (e.g. US 4277344 and US 6878278). The polyamide membrane layer may be prepared by interfacially polymerizing a polyfunctional amine monomer with a polyfunctional acyl halide monomer, (wherein each term is intended to refer both to the use of a single species or multiple species), on at least one surface of a porous support. As used herein, the term "polyamide" refers to a polymer in which amide linkages (-C(O)NH-) occur along the molecular chain. The polyfunctional amine and polyfunctional acyl halide monomers are most commonly applied to the porous support by way of a coating step from solution, wherein the polyfunctional amine monomer is typically coated from an aqueous-based or polar solution and the polyfunctional acyl halide from an organic-based or non-polar solution.

In operation, the subject spiral wound module is preferably housed within a pressure vessel and defines a spiral wound assembly that includes a feed liquid inlet, concentrate outlet and permeate outlet. Pressure vessels used in the present invention are not particularly limited but preferably include a solid structure capable of withstanding pressures associated with operating conditions. The vessel structure preferably includes a chamber having an inner periphery corresponding to that of the outer periphery of the spiral wound modules to be housed therein. The orientation of the pressure vessel is not particularly limited, e.g. both horizontal and vertical orientations may be used. Examples of applicable pressure vessels, module arrangements and loading are described in: US 6074595, US 6165303, US 6299772 and US 2008/0308504. Manufacturers of pressure vessels for large systems include Pentair of Minneapolis MN, Bekaert of Vista CA and Bel Composite of Beer Sheva, Israel. For smaller systems, a molded plastic vessel with a single detachable end cap is commonly used.

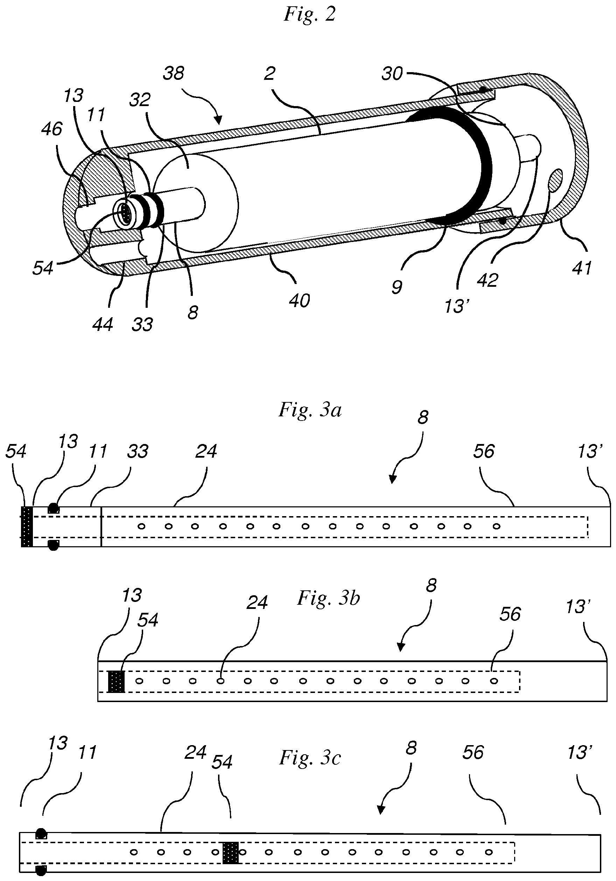

The present invention is particular suitable to modules and spiral wound assemblies designed for residential use, e.g. those have less than 2 m² and more preferably less 1 m² of membrane area. A preferred length for such a module is less than 0.5 m. A representative hyperfiltration module includes FilmTec's 1812 configuration (e.g. TW30-1812), which is nominally 1.8 inches (4.6 cm) in diameter and nominally 12 inches (30 cm) long. In Figure 2, a single module (2) is positioned within the pressure vessel (40) and the assembly includes a single feed inlet, concentrate outlet and permeate outlet. This embodiment is particularly advantaged when connected to a feed pump (e.g. providing at least 400 kPa water pressure to the module at 25°C) without user-adjustable speed control.

With reference to Figure 2, a representative embodiment of the subject spiral wound assembly is generally shown at 38, including a pressure vessel (40) with a detachable end cap (41), feed inlet (42), concentrate outlet (44) and permeate outlet (46). The feed inlet (42) is adapted for connection with a pressurized source of feed liquid. The concentrate outlet (44) is adapted for connection to a pathway for re-use or disposal. The permeate outlet (46) is adapted for connection to a pathway for storage, use, or further treatment. In the illustrated embodiment, one spiral wound module (2) with peripheral brine seal (9) fits against an inner surface of the vessel (40). During assembly, the permeate collection tube (8) is connected to the permeate outlet (46). O-rings (11) are optionally disposed about the tube (8) to perfect as seal with the permeate outlet (46). A flow controller (54) is positioned (e.g. fixed) within the permeate collection tube (8) near the second end (13). In an alternative embodiment, the flow controller (54) may be fixed to the end (13) of the permeate collection tube (8) such that permeate must pass through the flow controller as it exits the module (8).

Figures 3a, 3b, and 3c illustrate possibilities of permeate collection tube (8) configurations with the flow controller (54) positioned at different locations along the length of tube (8), the possibilities of figures 3a and 3c not falling within the scope of the invention, and the possibility of figure 3b being according to the invention. The length between opposing ends (13,13') of the permeate collection tube (8) may vary, and may or may not extend beyond one or both scroll faces (30, 32) of a module (2). As shown in Figure 3a, the permeate collection tube (8) may also comprises a coupling extension (33), and the flow controller (54) may be located within or fixed to the end of the coupling extension (33). In an alternative embodiment not shown, the flow controller (54) may be fixed to the end (13) of the permeate collection tube (8) such that permeate must pass therethrough to exit the module (2). For purposes of the present invention, the coupling extension (33) is considered part of the permeate collection tube (8).

As illustrated in these embodiments, the permeate collection tubes (8) have a plurality of openings (24) between opposing ends (13,13'). However, in the illustrated embodiments, it is possible that only one of the tube ends (13) is in fluid communication with the openings (24). That is, the first end (13) of the tube (8) is preferably sealed such that the permeate flow path way (28) extends from the membrane envelop, into the openings (24), through the tube (8) and exits via the second end (13) of the tube. Figures 3a and 3b illustrate configurations where this is the case and the flow controller (54) is located downstream of the openings (24). As the flow controller (54) is located between the second end (13) and all of the openings (24), all permeate that enters the permeate collection tube (8) passes through the flow controller (54). As illustrated in Figure 3c, the flow controller (24) may be positioned between individual openings (24). In this embodiment, flow through holes downstream of the flow controller (54) is promoted and flow upstream of the flow controller (54) is retarded. According to the invention, the flow controller (54) is located within the permeate collection tube (8) such that at least 90% of permeate flowing along the permeate flow path (28) passes through the flow controller (54) prior to exiting the second end (13) of the permeate collection tube (8).

The flow controller (54) provides flow resistance that varies as a function of permeate flow, i.e. increasing resistance as permeate flow increases. "Resistance" (R) is defined as the ratio of pressure drop (Δp) to flow (F), i.e. R=Δp/F. Pressure drop across the flow controller (54) always increases monotonically with flow, but the resistance value is not a constant and can change with flow. The flow controller (54) increases resistance as flow (or pressure drop) across the flow controller (54) increases. In this way, flow across the flow controller can be maintained relatively constant in operation over a desired pressure range. Alternatively stated, the pressure drop can increase by a factor of two, four, or even ten, with only a 10% change in flow. For example, a 5 GPM flow controller (e.g. model# 2305-1141-3/4 available from O'Keefe Controls Co.) maintains flow within ±10% of the flow rating as pressure drop ranges between 0.1 and 10 mPa. By retarding permeate flow through the permeate collection tube (8), "over-fluxing" is prevented despite variable operating conditions. According to the invention, the flow controller (54) includes a compliant member that can deform to cause greater resistance to flow at higher permeate flow rates or greater pressure drops across the flow controller. The flow controller can include an orifice that becomes partially obstructed or changes shape, i.e. narrowing as permeate flow increases and opening as permeate flow decreases. Another suitable flow controller includes wafer type valves described at www.maric.com.au. The degree of pressure drop created by the flow controller may be optimized based upon the characteristics of the assembly, e.g. number of modules, quality of feed liquid, feed operating pressure, etc. In one preferred embodiment, the flow controller is characterized by controlling permeate flux to a value less than 40 l/m²hr when the module is operated with pure water (e.g. RO treated or deionized) at a feed pressure of 400 kPa and temperature of 25°C. Preferably, it would be controlled to a value between 20 and 50 l/m²hr, more preferably between 30 and 40 l/m²hr, under conditions of 400 kPa and temperature of 25°C, whereas it would otherwise be greater than this value by more than 20%. In other embodiments, the flow controller is characterized by controlling permeate flow to a value of between 250 and 1500 liters per day when the module is operated with pure water at a feed pressure of 400 kPa and temperature of 25°C. In still other embodiments, the flow controller is characterized by providing a base flow value (liters per minute) when the module is operated at a feed water pressure of 200 kPa and temperature of 25°C, and wherein the flow controller provides a flow value equal to at least 50% of the base flow value (liters per minute) when operated at a feed water pressure of only 35 kPa and temperature of 25°C. More preferably, the flow controller is characterized by providing a base flow value (liters per minute) when the module is operated at a feed water pressure of 300 kPa and temperature of 25°C, and the flow controller provides a flow value equal to at least 50% of the base flow value (liters per minute) when operated at a feed water pressure of only 35 kPa and temperature of 25°C.

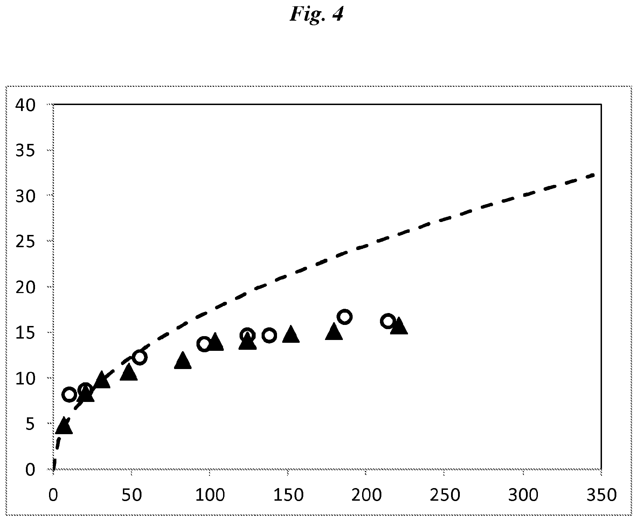

To better illustrate the effect of a flow controller, Figure 4 provides a plot of flow (GPD) versus the pressure differential (psi) across an orifice using a classic orifice model (- -) and two commercial flow controllers (○, ▲). As shown by the plot, the flow controllers provide relatively uniform flow over a broad range of pressure differentials.

## Claims

1. A spiral wound assembly (38) comprising a pressure vessel (40) including a feed inlet (42), a concentrate outlet (44) and a permeate outlet (46);
a single spiral wound membrane module (2) located within the pressure vessel (40) comprising at least one membrane envelope (4) wound about a permeate collection tube (8); the permeate collection tube (8) has a length extending from a first end (13') to an opposing second end (13) and comprises a plurality of openings (24) along a portion of its length between said ends (13, 13');
a permeate flow path (28) extends from within the membrane envelope (4) through the openings (24) and into the permeate collection tube (8) and exits the second end (13) of permeate collection tube (8); and
wherein the module (2) is **characterized by** a flow controller (54) located within or fixed to the permeate collection tube (8) such that at least 90% of permeate flowing along the permeate flow path (28) passes through the flow controller (54) prior to exiting the second end (13) of the permeate collection tube (8); and wherein the flow controller (54) comprises a compliant member that increases flow resistance as permeate flow increases.

2. The assembly of claim 1 wherein the flow controller (54) comprises a variable area orifice that decreases as a function of permeate flow.

3. The assembly of claim 1 wherein the flow controller (54) is located within or fixed to the permeate collection tube (8) at a location along the tube's length between the openings (24) and the second end (13) such that all permeate flowing along the permeate flow path (28) passes through the flow controller (54) prior to exiting the second end (13) of the permeate collection tube (8).

## Patentansprüche

1. Eine spiralförmig gewickelte Anordnung (38), die einen Druckbehälter (40), umfassend einen Zufuhreinlass (42), einen Konzentratauslass (44) und einen Permeatauslass (46), beinhaltet;
wobei ein einzelnes spiralförmig gewickeltes Membranmodul (2), das innerhalb des Druckbehälters (40) angeordnet ist, mindestens eine Membranumhüllung (4) beinhaltet, die um ein Permeatsammelrohr (8) gewickelt ist; wobei das Permeatsammelrohr (8) eine Länge aufweist, die sich von einem ersten Ende (13') zu einem gegenüberliegenden zweiten Ende (13) erstreckt und eine Vielzahl von Öffnungen (24) entlang einem Teil seiner Länge zwischen den Enden (13, 13') beinhaltet;
wobei sich ein Permeatdurchflusspfad (28) von innerhalb der Membranumhüllung (4) durch die Öffnungen (24) und in das Permeatsammelrohr (8) erstreckt und aus dem zweiten Ende (13) des Permeatsammelrohrs (8) austritt; und
wobei das Modul (2) durch einen Durchflussregler (54) gekennzeichnet ist, der innerhalb des Permeatsammelrohrs (8) so angeordnet oder an diesem fixiert ist, dass mindestens 90 % des Permeats, das entlang dem Permeatdurchflusspfad (28) fließt, vor dem Austreten aus dem zweiten Ende (13) des Permeatsammelrohrs (8) durch den Durchflussregler (54) laufen; und wobei der Durchflussregler (54) ein konformes Element beinhaltet, das den Durchflusswiderstand erhöht, während sich der Permeatfluss erhöht.

2. Anordnung gemäß Anspruch 1, wobei der Durchflussregler (54) einen Durchlass mit variablem Bereich beinhaltet, der sich als eine Funktion des Permeatflusses verkleinert.

3. Anordnung gemäß Anspruch 1, wobei der Durchflussregler (54) innerhalb des Permeatsammelrohrs (8) so angeordnet oder an einer Stelle entlang der Länge des Rohrs zwischen den Öffnungen (24) und dem zweiten Ende (13) fixiert ist, dass das gesamte Permeat, das entlang dem Permeatdurchflusspfad (28) fließt, vor dem Austreten aus dem zweiten Ende (13) des Permeatsammelrohrs (8) durch den Durchflussregler (54) läuft.

## Revendications

1. Un ensemble enroulé en spirale (38) comprenant un récipient sous pression (40) incluant une entrée d'alimentation (42), une sortie de concentrat (44) et une sortie de perméat (46) ;
un module membranaire enroulé en spirale unique (2) placé à l'intérieur du récipient sous pression (40) comprenant au moins une enveloppe membranaire (4) enroulée autour d'un tube collecteur de perméat (8) ; le tube collecteur de perméat (8) a une longueur s'étendant d'une première extrémité (13') à une deuxième extrémité opposée (13) et comprend une pluralité d'ouvertures (24) le long d'une portion de sa longueur entre lesdites extrémités (13, 13') ;
une voie d'écoulement de perméat (28) s'étend de l'intérieur de l'enveloppe membranaire (4) à travers les ouvertures (24) et jusque dans le tube collecteur de perméat (8) et sort par la deuxième extrémité (13) du tube collecteur de perméat (8) ; et où le module (2) est **caractérisé par** un régulateur de débit (54) placé à l'intérieur du tube collecteur de perméat (8) ou fixé à celui-ci de telle sorte qu'au moins 90 % du perméat s'écoulant le long de la voie d'écoulement de perméat (28) passe à travers le régulateur de débit (54) avant de sortir par la deuxième extrémité (13) du tube collecteur de perméat (8) ; et où le régulateur de débit (54) comprend un élément adaptatif (« compliant ») qui augmente la résistance à l'écoulement à mesure que l'écoulement de perméat augmente.

2. L'ensemble de la revendication 1 où le régulateur de débit (54) comprend un orifice d'aire variable qui diminue en fonction de l'écoulement de perméat.

3. L'ensemble de la revendication 1 où le régulateur de débit (54) est placé à l'intérieur du tube collecteur de perméat (8) ou fixé à celui-ci au niveau d'un emplacement sur la longueur du tube entre les ouvertures (24) et la deuxième extrémité (13) de telle sorte que tout perméat s'écoulant le long de la voie d'écoulement de perméat (28) passe à travers le régulateur de débit (54) avant de sortir par la deuxième extrémité (13) du tube collecteur de perméat (8).
